# FASCICULE DE BREVET EUROPEEN

(11) **EP 3 484 698 B1**
(45) Date de publication et mention de la délivrance du brevet: **13.05.2020**
(21) Numéro de dépôt: 17745837.9
(22) Date de dépôt: 05.07.2017
(51) Int. Cl.: B29D 30/06

(54) **LAMELLE TEXTUREE POUR GARNITURE D'UN MOULE DESTINE A LA VULCANISATION D'UN PNEUMATIQUE**
TEXTURIERTE LAMELLE ZUR AUSKLEIDUNG EINER FORM ZUR VULKANISIERUNG EINES REIFENS
TEXTURED BLADE FOR THE LINING OF A MOLD USED FOR VULCANIZING A TIRE

(30) Priorité: 18.07.2016 FR 1670388
(43) Date de publication de la demande: 22.05.2019
(73) Titulaire: Compagnie Générale des Etablissements Michelin, 63000 Clermont-Ferrand (FR)
(72) Inventeur: BLANCHET, Etienne, 63040 Clermont-Ferrand Cedex 9 (FR); CALVEL, Romain, 63040 Clermont-Ferrand Cedex 9 (FR); PICHOIR, Sébastien, 63040 Clermont-Ferrand Cedex 9 (FR)
(74) Mandataire: Roussy, Delphine
(86) Numéro de dépôt international: PCT/FR2017/051831
(87) Numéro de publication internationale: WO 2018/015631

(56) Documents cités:
- WO-A1-2007/045425
- WO-A2-2016/016699
- JP-A- 2000 102 925
- US-A1- 2002 134 202
- US-A1- 2005 109 438

## Description

### DOMAINE TECHNIQUE DE L'INVENTION

La présente invention concerne un élément de moule destiné à être rapporté dans un moule pour la vulcanisation d'une bande de roulement d'un pneumatique.

### ETAT DE LA TECHNIQUE ANTERIEURE

La surface des pneumatiques supporte une grande quantité de marquages destinés d'une part à donner des informations techniques sur la qualité du pneumatique, et d'autre part à permettre au consommateur de distinguer la marque et l'origine du produit. Ces marquages sont, en règle générale, obtenus par des motifs en relief disposés sur la surface du pneumatique et correspondent à des motifs en creux réalisés sur la surface de moulage. Usuellement, les moules de vulcanisation sont réalisés en métal avec un très bon aspect de finition de surface. Mais la surface externe du pneumatique qui en résulte, lisse et noire, a pour effet de renvoyer la lumière.

Le document WO2007/045425 décrit des types particuliers de textures à fort contraste sur pneumatique. Ces textures ont pour effet principal de piéger la lumière incidente et, par absorption de la lumière, de donner un aspect noir et mat à une partie du pneumatique. Cette absorption de lumière permet l'obtention d'une couleur noire plus intense et formant un meilleur contraste avec le reste de la surface du pneumatique. Le contraste est d'autant plus important lorsque la texture côtoie des surfaces brillantes sur le pneumatique.

La présence de cette texture peut également être recherchée au niveau des parois latérales des blocs de gomme constituant la sculpture de la bande de roulement du pneumatique. Dans le cas où ces parois délimitent une rainure, c'est-à-dire une découpure présentant une largeur supérieure à 2 mm, la texture permet de donner un effet de profondeur à la bande de roulement et d'améliorer en conséquence son esthétisme. Dans le cas où ces parois délimitent une incision, c'est-à-dire une découpure présentant une largeur inférieure à 2 mm, la texture modifie le mouvement relatif des parois latérales entre elles.

un autre élément de moule est connu du document JP 2000102925 - A qui décrit la réalisation de lamelles pour moules de vulcanisation de pneus, lesdites lamelles étant pourvues d'ouvertures dans leur corps principal et étant constituées d'une pluralité de portions fabriquées séparément et jointes entre elles.

Il existe aujourd'hui un besoin pour des solutions permettant de produire avec une grande souplesse et des coûts avantageux, des pneumatiques comprenant des parois latérales de blocs de gomme ayant une texture.

Pour pallier ces différents inconvénients, l'invention prévoit différents moyens techniques.

### EXPOSE DE L'INVENTION

Tout d'abord, un premier objet de l'invention consiste à prévoir un élément de moule offrant une grande souplesse dans l'agencement de textures.

Un autre objet de l'invention consiste à prévoir un élément de moule pourvu de textures très fines réalisées de façon optimale.

Pour ce faire, l'invention prévoit un élément de moule destiné à être rapporté dans un moule pour la vulcanisation d'une bande de roulement d'un pneumatique selon la revendication 1. Ledit élément de moule comprenant une partie de moulage configurée pour mouler au moins une incision ou une rainure dans la bande de roulement du pneumatique, la partie de moulage comprenant :
- un corps principal;
- une ouverture dans le corps principal;
- un insert logé dans l'ouverture, ledit insert comportant une texture;
- des moyens de solidarisation de l'insert avec le corps principal;
- le corps principal de l'élément de moule étant réalisé selon un premier procédé de fabrication et l'insert étant réalisé selon un second procédé de fabrication différent du premier procédé.

Une telle architecture d'élément de moule permet d'optimiser la fabrication des inserts servant de support aux textures pour ainsi pouvoir réaliser des textures très fines et/ou complexes à l'aide d'un procédé de fabrication spécifiquement adapté à cette exigence. Cette architecture permet d'agencer une quasi infinité de textures sur un corps principal simple à réaliser et peu coûteux.

Les caractéristiques des textures sont adaptées en fonction des pneumatiques à produire.

Selon un mode de réalisation avantageux, l'insert est réalisé selon un procédé impliquant une fusion sélective par laser.

Ce mode de fabrication est particulièrement adapté à la mise en forme d'éléments de textures de très petites dimensions et/ou de formes complexes. Le corps principal est avantageusement mis en œuvre par un procédé classique, comme par exemple par emboutissage. Ce mode de fabrication est simple à mettre en œuvre et permet de réaliser des pièces de faible épaisseur avec une grande fiabilité, à des coûts particulièrement avantageux. Chacun des composants de l'ensemble est ainsi optimisé, tant du point de vu des coûts que des caractéristiques mécaniques requises.

De manière avantageuse, la texture de l'insert est obtenue par gravure laser.

Selon plusieurs modes de réalisation avantageux, la texture de l'insert comprend une pluralité d'éléments en creux ou en protubérance venus de matière avec ledit insert.

Par exemple, tout ou partie des éléments en protubérance forme des brins, lesdits brins étant répartis dans le motif selon une densité au moins égale à un brin par millimètre carré (mm²), chaque brin ayant une section moyenne comprise entre 0,0005 mm² et 1 mm².

Selon un autre exemple, tout ou partie des éléments en protubérance forme des lames parallèles entre elles, le pas des lames dans le motif étant au plus égal à 0,5 mm, chaque lame ayant une largeur moyenne comprise entre 0,02 mm et 0,5 mm.

Selon encore un autre exemple, tout ou partie des éléments en protubérance forme des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0.5 mm.

Selon encore un autre exemple, tout ou partie des éléments en creux forme des stries sensiblement parallèles entre elles, le pas des stries dans le motif étant au plus égal à 0,5 mm, chaque strie ayant une largeur moyenne comprise entre 0,02 mm et 0,5 mm.

Selon encore un autre exemple, tout ou partie des éléments en creux forme des cônes réparties dans la texture selon une densité au moins égale à un cône par millimètre carré (mm²), chaque cône ayant une section moyenne comprise entre 0,0005 mm² et 1 mm².

Selon un autre mode de réalisation avantageux, tout ou partie des éléments en creux ou en protubérance présentent des formes et des distances variables entre eux.

Selon encore un autre mode de réalisation avantageux, l'insert comporte une pluralité de bosses et de creux sur laquelle s'étend la texture. Un tel agencement forme une structure pouvant par exemple ressembler au fond d'une boîte à œufs. Ce type de profil permet d'agir de façon efficace sur le niveau de glissement entre les parois voisines des blocs de gomme.

De manière avantageuse, des moyens de solidarisation de l'insert avec le corps principal sont réalisés par collage, ou soudure, ou clipsage, ou goupillage.

Selon encore un autre mode de réalisation avantageux, l'insert comprend deux parties adaptées pour se clipser entre elles de part et d'autre du corps principal.

Selon une variante de réalisation avantageuse, qui ne fait pas partie de l'invention telle que revendiquée, une seule face de l'insert est pourvue d'une texture.

Dans un exemple de réalisation, ledit élément de moule est une lamelle, et selon un autre exemple de réalisation, ledit élément de moule est un cordon.

L'invention prévoit également une moule pour vulcanisation de pneumatique selon la revendication 15, comportant une pluralité d'éléments de moule tels que préalablement décrits.

### DESCRIPTION DES FIGURES

Tous les détails de réalisation sont donnés dans la description qui suit, complétée par les figures 1 à 9, présentées uniquement à des fins d'exemples non limitatifs, et dans lesquelles:
- la figure 1A est une vue en perspective d'un exemple d'élément de moule sans insert;
- la figure 1B montre l'exemple de la figure 1 avec un insert mis en place ;
- la figure 2A illustre une vue en coupe d'un premier exemple d'un élément de moule avec un insert mis en place ;
- la figure 2B illustre une vue en coupe d'un second exemple d'un élément de moule avec un insert mis en place ;
- la figure 3 illustre une vue en coupe d'un troisième exemple d'un élément de moule avec un insert mis en place ;
- les figures 4 à 9 illustrent des exemples de textures prévues sur un insert.

### DESCRIPTION DETAILLEE DE L'INVENTION

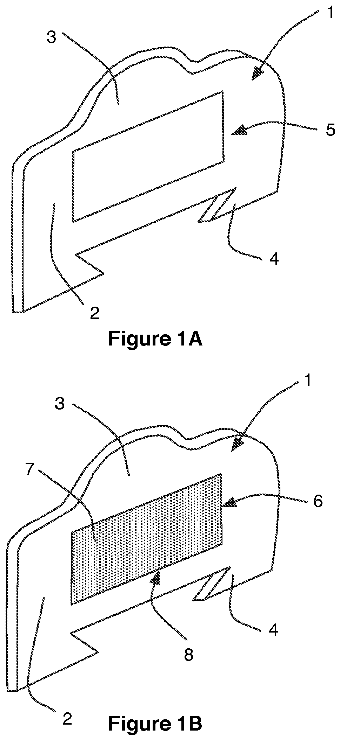

**La** figure 1A illustre un exemple de réalisation d'un élément de moule 1 tel qu'une lamelle pour une garniture d'un moule destiné à la vulcanisation d'une bande de roulement d'un pneumatique. Une partie de moulage 2 comporte un corps principal 3 dans lequel est pratiqué une ouverture 5.

Une zone d'ancrage 4, sous la partie de moulage 2, permet de fixer l'élément de moule au moule correspondant. La partie de moulage 2 est configurée pour mouler au moins une découpure, comme par exemple une incision ou une rainure, dans une bande de roulement d'un pneumatique à mouler.

Tel que montré à la figure 1B, l'ouverture 5 permet de loger un insert 6, de forme et dimension correspondantes à celles de l'ouverture 5. Dans les exemples illustrés, l'assemblage 8 entre le corps principal 3 et l'insert 6 est mis en œuvre par soudure. D'autres types de moyens de solidarisation peuvent également être utilisés tels que par clipsage ou collage.

Cet insert 6 est principalement utilisé en tant que support pour des textures 7. Ces textures sont prévues afin de produire sur les parois latérales des blocs de gomme constituant la sculpture de la bande de roulement du pneumatique des sculptures correspondantes. Ces textures sont prévues sur les parois des blocs de gomme afin soit d'avoir un effet esthétique, en particulier au niveau des rainures, et/ou pour agir sur le comportement mécanique de la bande de roulement en modifiant le niveau de frottement relatif entre les parois latérales des blocs de gomme voisins.

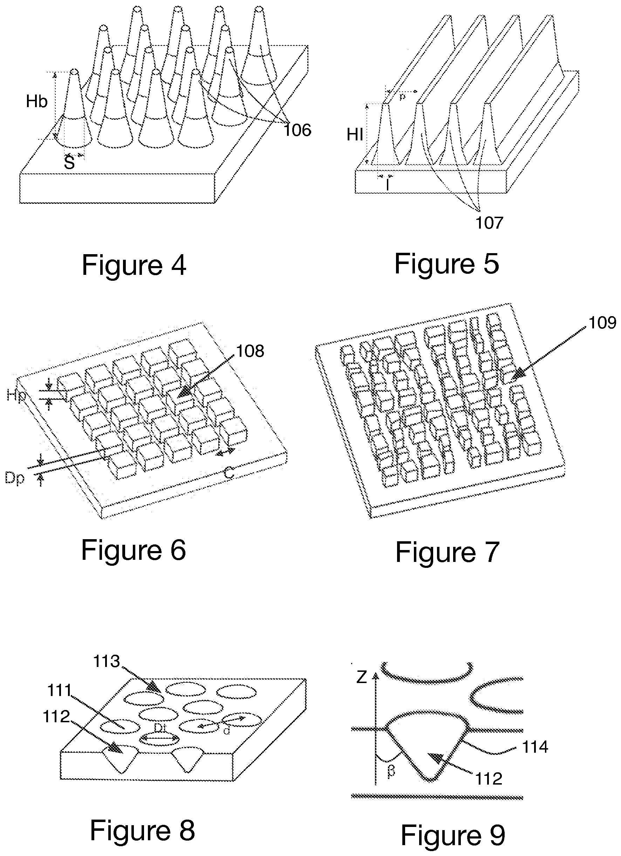

**Les** figures 4 à 9 (décrites ultérieurement) illustrent des exemples de réalisation de textures pour les inserts 6. Les inserts prévoient au moins une première face dont au moins une portion prévoit de telles textures. La seconde face peut comporter une surface sensiblement lisse ou encore pourvue de textures similaires ou différentes de celles de la première face.

Par « texture », on entend un agencement organisé d'une pluralité d'éléments (stries, trous, brins, lames), tout ou partie de ces éléments étant la répétition d'un même élément de base, le motif présent sur le moule permettant d'obtenir une texture particulière sur un pneumatique.

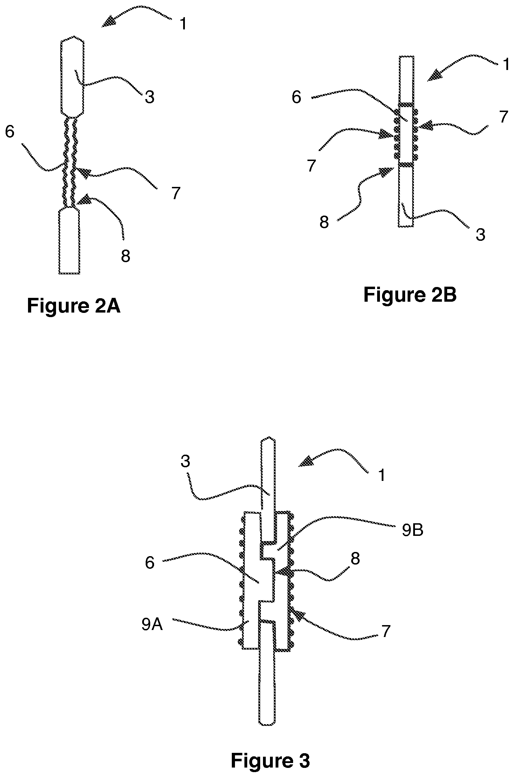

Les figures 2A et 2B illustrent des modes de réalisation dans lequel l'insert 6 est collé (figure 2A) ou soudé (figure 2B) au corps principal 3. Dans l'exemple de la figure 2A, les textures 7 sont légèrement enfoncées par rapport aux faces adjacentes du corps principal 3, permettant de former des textures légèrement proéminentes sur les blocs de gomme, pour un meilleur contact entre elles. Dans l'exemple de la figure 2B, les textures sont sensiblement alignées avec les faces du corps principal 3.

La figure 3 présente un mode de réalisation dans lequel l'insert 6 est configuré en deux parties 9A et 9B et les moyens de solidarisation 8 comprennent des moyens de clipsage des deux parties entre elles à travers l'ouverture. Un tel mode de réalisation permet par exemple de réaliser des éléments de marquage initialement cachés, tel que des indicateurs d'usure par exemple.

Les figures 4 à 9 illustrent des exemples de textures pouvant être disposées sur un insert selon l'invention.

La figure 4 illustre un mode de réalisation dans lequel le motif comporte une pluralité de brins 106. Les brins 106 sont répartis dans le motif selon une densité au moins égale à un brin par mm², chaque brin ayant une section moyenne S comprise entre 0,0005 mm² et 1 mm². On note que la section moyenne de chaque brin correspond à la moyenne des sections S mesurées à intervalles réguliers depuis la base du brin. Les brins 106 ont une forme globalement conique avec une section diminuant dans la hauteur Hb de ces brins.

La figure 5 illustre un mode de réalisation dans lequel le motif comporte une pluralité de lames 107 parallèles entre elles, le pas des lames 107 dans le motif étant au plus égal à 0,5 mm, chaque lame 107 ayant une largeur moyenne comprise entre 0,02 mm et 0,5 mm. On note que la largeur moyenne correspond à la moyenne des largeurs l mesurées à intervalles réguliers dans la hauteur Hl de la lame, la hauteur de chaque lame étant comprise entre 0,05 et 0,5 mm.

Dans une autre variante de réalisation, le motif comporte une combinaison de brins 106 et/ou et de lames 107.

L'invention n'est pas limitée aux exemples décrits et représentés et diverses modifications peuvent y être apportées sans sortir de son cadre. Ainsi, selon une autre variante de réalisation non limitative, les lames 107 de la figure 5 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Dans l'exemple de la figure 6, les motifs ont une section parallélépipédique 108 de côté C compris entre 0,05 mm et 0,5 mm, de hauteur Hp comprise entre 0,05 mm et 0,5 mm, la distance Dp entre deux cavités adjacentes dans la texture étant comprise entre 0,05 mm et 0.5 mm. En variante la section des motifs peut être circulaire, polygonale (par exemple hexagonale). Avec les structures carrée ou polygonale, il est possible d'organiser plus facilement les éléments les uns par rapport aux autres de sorte à limiter la surface des zones intermédiaires entre les éléments.

Dans la variante de la figure 7, les éléments 109 présentent des formes et des distances variables entre eux. Cette variante permet de rentre moins visible les détails de la texture.

La figure 8 illustre le motif selon une autre variante de réalisation non limitative. Dans cette variante, le motif est formé par une pluralité de cavités 112. Les cavités 112 sont ici en forme de cônes qui s'étendent dans la profondeur du moule et débouchent sur le moule en formant des ouvertures circulaires 111. Les cavités 112 ont ainsi une section qui diminue dans la profondeur du moule. On note que dans cette variante, les ouvertures 111 des cavités 112 ne se touchent pas. Les ouvertures 111 sont séparées par des zones intermédiaires 113. En outre, les ouvertures 111 sont régulièrement réparties sur le moule de sorte que la distance d entre chaque ouverture du motif est globalement similaire.

La figure 9 est une vue agrandie du motif de la figure 10. Tout ou partie des cavités a ici au moins une paroi 114 qui, selon une vue en coupe, forme un angle β compris entre 10° et 60° par rapport à une direction Z perpendiculaire au motif.

### Numéros de référence employés sur les figures

- 1: Elément de moule
- 2: Partie de moulage
- 3: Corps principal
- 4: Zone d'encrage
- 5: Ouverture du corps principal
- 6: Insert
- 7: Textures
- 8: Moyens de solidarisation
- 9A: Partie d'insert
- 9B: Partie d'insert
- 106: Brins
- 107: Lames
- 108: Parallélépipèdes
- 109: Elément de formes et distances variables
- 111: Ouvertures
- 112: Cônes
- 113: Zones intermédiaires
- 114: Parois

## Revendications

1. Elément de moule (1) destiné à être rapporté dans un moule pour la vulcanisation d'une bande de roulement d'un pneumatique, ledit élément de moule comprenant une partie de moulage (2) configurée pour mouler au moins une incision ou une rainure dans la bande de roulement du pneumatique, dans lequel:
- la partie de moulage (2) comprend :
- un corps principal (3);
- une ouverture (5) dans le corps principal (3), ladite partie de moulage étant **caractérisée en ce qu'**elle comprend
- un insert (6) logé dans l'ouverture (5), ledit insert (6) comportant une texture (7) ;
- des moyens de solidarisation (8) de l'insert (6) avec le corps principal (3) ;
et **en ce que** le corps principal (3) de l'élément de moule est réalisé selon un premier procédé de fabrication et l'insert (6) est réalisé selon un second procédé de fabrication différent du premier procédé.

2. Elément de moule selon la revendication 1, **caractérisé en ce que** l'insert (6) est réalisé selon un procédé impliquant une fusion sélective par laser.

3. Elément de moule selon l'une quelconque des revendications 1 ou 2, **caractérisé en ce que** la texture (7) de l'insert (6) est obtenue par gravure laser.

4. Elément de moule selon l'une quelconque des revendications 1 à 3, **caractérisé en ce que** la texture (7) de l'insert (6) comprend une pluralité d'éléments en creux ou en protubérance venus de matière avec ledit insert.

5. Elément de moule selon la revendication 4, **caractérisé en ce que** tout ou partie des éléments en protubérance forme des brins, lesdits brins (106) étant répartis dans le motif selon une densité au moins égale à un brin par millimètre carré (mm²), chaque brin ayant une section moyenne comprise entre 0,0005 mm² et 1 mm².

6. Elément de moule selon la revendication 4 ou la revendication 5, **caractérisé en ce que** tout ou partie des éléments en protubérance forme des lames (107 parallèles entre elles, le pas des lames dans le motif étant au plus égal à 0,5 mm, chaque lame ayant une largeur moyenne comprise entre 0,02 mm et 0,5 mm.

7. Elément de moule selon l'une quelconque des revendications 4 à 6, **caractérisé en ce que** tout ou partie des éléments en protubérance forme des parallélépipèdes (108) de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0.5 mm.

8. Elément de moule selon l'une quelconque des revendications 4 à 7, **caractérisé en ce que** tout ou partie des éléments en creux forme des stries sensiblement parallèles entre elles, le pas des stries dans le motif étant au plus égal à 0,5 mm, chaque strie ayant une largeur moyenne comprise entre 0,02 mm et 0,5 mm.

9. Elément de moule selon l'une quelconque des revendications 4 à 8, **caractérisé en ce que** tout ou partie des éléments en creux forme des cônes (112) répartis dans la texture selon une densité au moins égale à un cône par millimètre carré (mm²), chaque cône ayant une section moyenne comprise entre 0,0005 mm² et 1 mm².

10. Elément de moule selon l'une quelconque des revendications 4 à 9, **caractérisé en ce que** tout ou partie des éléments (109) en creux ou en protubérance présentent des formes et des distances variables entre eux.

11. Elément de moule selon l'une quelconque des revendications précédentes, **caractérisé en ce que** l'insert (6) comporte une pluralité de bosses et de creux sur laquelle s'étend la texture.

12. Elément de moule selon l'une quelconque des revendications précédentes, **caractérisé en ce que** des moyens de solidarisation (8) de l'insert (6) avec le corps principal (3) sont réalisés par collage, ou soudure, ou clipsage, ou goupillage.

13. Elément de moule selon l'une des revendications précédentes, **caractérisé en ce que** l'insert (6) comprend deux parties adaptées pour se clipser entre elles de part et d'autre du corps principal (3).

14. Elément de moule selon l'une quelconque des revendications 1 à 13, **caractérisé en ce que** ledit élément de moule est une lamelle ou un cordon.

15. Moule pour vulcanisation de pneumatique, comportant une pluralité d'éléments de moule (1) selon l'une des revendications 1 à 14.

## Patentansprüche

1. Formelement (1), das dazu bestimmt ist, in eine Form zum Vulkanisieren eines Laufstreifens eines Reifens eingelegt zu werden, wobei das Formelement ein Formungsteil (2) beinhaltet, das dazu ausgestaltet ist, mindestens einen Einschnitt oder eine Rille in dem Laufstreifen des Reifens zu formen, wobei:
- das Formungsteil (2) beinhaltet:
- einen Hauptkörper (3);
- eine Öffnung (5) in dem Hauptkörper (3), wobei das Formungsteil **dadurch gekennzeichnet ist, dass** es beinhaltet:
- einen Einsatz (6), der in der Öffnung (5) aufgenommen ist, wobei der Einsatz (6) eine Textur (7) umfasst;
- Einrichtungen zum Verbinden (8) des Einsatzes (6) mit dem Hauptkörper (3);
und dass der Hauptkörper (3) des Formelements nach einem ersten Fertigungsverfahren ausgeführt ist und der Einsatz (6) nach einem zweiten Fertigungsverfahren ausgeführt ist, das vom ersten Verfahren verschieden ist.

2. Formelement nach Anspruch 1, **dadurch gekennzeichnet, dass** der Einsatz (6) nach einem Verfahren ausgeführt ist, das ein selektives Schmelzen durch Laser beinhaltet.

3. Formelement nach einem der Ansprüche 1 oder 2, **dadurch gekennzeichnet, dass** die Textur (7) des Einsatzes (6) durch Lasergravur erhalten wird.

4. Formelement nach einem der Ansprüche 1 bis 3, **dadurch gekennzeichnet, dass** die Textur (7) des Einsatzes (6) eine Mehrzahl von vertieften oder erhabenen Elementen umfasst, die materialeinheitlich mit dem Einsatz sind.

5. Formelement nach Anspruch 4, **dadurch gekennzeichnet, dass** alle oder ein Teil der erhabenen Elemente Fäden bilden, wobei die Fäden (106) in dem Muster mit einer Dichte von mindestens einem Faden je Quadratmillimeter (mm²) verteilt sind, wobei jeder Faden einen mittleren Querschnitt zwischen 0,0005 mm² und 1 mm² hat.

6. Formelement nach Anspruch 4 oder Anspruch 5, **dadurch gekennzeichnet, dass** alle oder ein Teil der erhabenen Elemente Lamellen (107) bilden, die parallel zueinander sind, wobei die Schrittweite der Lamellen in dem Muster höchstens 0,5 mm beträgt, wobei jede Lamelle eine mittlere Breite zwischen 0,02 mm und 0,5 mm hat.

7. Formelement nach einem der Ansprüche 4 bis 6, **dadurch gekennzeichnet, dass** alle oder ein Teil der erhabenen Elemente Quader (108) mit einer Kantenlänge zwischen 0,05 mm und 0,5 mm und einer Höhe zwischen 0,05 mm und 0,5 mm bilden, wobei der Abstand zwischen zwei benachbarten Quadern in der Textur zwischen 0,05 mm und 0,5 mm beträgt.

8. Formelement nach einem der Ansprüche 4 bis 7, **dadurch gekennzeichnet, dass** alle oder ein Teil der vertieften Elemente Riefen sind, die im Wesentlichen parallel zueinander sind, wobei die Schrittweite der Riefen in dem Muster höchstens 0,5 mm beträgt, wobei jede Riefe eine mittlere Breite zwischen 0,02 mm und 0,5 mm hat.

9. Formelement nach einem der Ansprüche 4 bis 8, **dadurch gekennzeichnet, dass** alle oder ein Teil der vertieften Elemente Kegel (112) bilden, die in der Textur mit einer Dichte von mindestens einem Kegel je Quadratmillimeter (mm²) verteilt sind, wobei jeder Kegel einen mittleren Querschnitt zwischen 0,0005 mm² und 1 mm² hat.

10. Formelement nach einem nach einem der Ansprüche 4 bis 9, **dadurch gekennzeichnet, dass** alle oder ein Teil der vertieften oder erhabenen Elemente (109) untereinander variable Formen und Abstände aufweisen.

11. Formelement nach einem der vorhergehenden Ansprüche, **dadurch gekennzeichnet, dass** der Einsatz (6) eine Mehrzahl von Vorsprüngen und Vertiefungen umfasst, über die sich die Textur erstreckt.

12. Formelement nach einem der vorhergehenden Ansprüche, **dadurch gekennzeichnet, dass** die Mittel zum Verbinden (8) des Einsatzes (6) mit dem Hauptkörper (3) durch Kleben, Schweißen, Klipsen oder Verstiften ausgeführt sind.

13. Formelement nach einem der vorhergehenden Ansprüche, **dadurch gekennzeichnet, dass** der Einsatz (6) zwei Teile umfasst, die geeignet sind, beidseits des Hauptkörpers (3) aneinandergeklipst zu werden.

14. Formelement nach einem der Ansprüche 1 bis 13, **dadurch gekennzeichnet, dass** das Formelements eine Lamelle oder ein Kord ist.

15. Form zum Vulkanisieren eines Reifens, die eine Mehrzahl von Formelementen (1) nach einem der Ansprüche 1 bis 14 umfasst.

## Claims

1. Mould element (1) intended to be fitted in a mould for vulcanizing a tread of a tyre, said mould element comprising a moulding part (2) configured to mould at least one sipe or groove in the tread of the tyre, wherein:
the moulding part (2) comprises:
- a main body (3);
- an opening (5) in the main body (3);
**characterized in that** said moulding part (2) comprises:
- an insert (6) intended to be housed in the opening (5), said insert (6) having a texture (7);
- securing means (8) for securing the insert (6) to the main body (3);
and **in that** the main body (3) of the mould element is made by a first manufacturing method and the insert (6) is made by a second manufacturing method different from the first method.

2. Mould element according to Claim 1, **characterized in that** the insert (6) is made by a method involving selective laser melting.

3. Mould element according to either one of Claims 1 and 2, **characterized in that** the texture (7) of the insert (6) is obtained by laser etching.

4. Mould element according to any one of Claims 1 to 3, **characterized in that** the texture (7) of the insert (6) comprises a plurality of recessed or protruding elements formed integrally with said insert.

5. Mould element according to Claim 4, **characterized in that** all or some of the protruding elements form strands, said strands (106) being distributed through the pattern at a density at least equal to one strand per square millimetre (mm²), each strand having a mean cross section of between 0.0005 mm² and 1 mm².

6. Mould element according to Claim 4 or Claim 5, **characterized in that** all or some of the protruding elements form mutually parallel blades (107), the spacing of the blades in the pattern being at most equal to 0.5 mm, each blade having a mean width of between 0.02 mm and 0.5 mm.

7. Mould element according to any one of Claims 4 to 6, **characterized in that** all or some of the protruding elements form parallelepipeds (108) having a side length of between 0.05 mm and 0.5 mm and a height of between 0.05 mm and 0.5 mm, the distance between two adjacent parallelepipeds in the texture being between 0.05 mm and 0.5 mm.

8. Mould element according to any one of Claims 4 to 7, **characterized in that** all or some of the recessed elements form substantially mutually parallel striations, the spacing of the striations in the pattern being at most equal to 0.5 mm, each striation having a mean width of between 0.02 mm and 0.5 mm.

9. Mould element according to any one of Claims 4 to 8, **characterized in that** all or some of the recessed elements form cones (112) distributed through the texture at a density at least equal to one cone per square millimetre (mm²), each cone having a mean cross section of between 0.0005 mm² and 1 mm².

10. Mould element according to any one of Claims 4 to 9, **characterized in that** all or some of the recessed or protruding elements (109) exhibit mutually variable shapes and distances.

11. Mould element according to any one of the preceding claims, **characterized in that** the insert (6) has a plurality of bosses and recesses over which the texture extends.

12. Mould element according to any one of the preceding claims, **characterized in that** securing means (8) for securing the insert (6) to the main body (3) are realized by bonding, or welding, or clip-fastening, or pinning.

13. Mould element according to one of the preceding claims, **characterized in that** the insert (6) comprises two parts that are designed to be clip-fastened together on either side of the main body (3).

14. Mould element according to any one of Claims 1 to 14, **characterized in that** said mould element is a lamella or a bar.

15. Mould for vulcanizing a tyre, having a plurality of mould elements according to one of Claims 1 to 14.
